# EUROPÄISCHE PATENTSCHRIFT

(11) **EP 2 344 799 B1**
(45) Veröffentlichungstag und Bekanntmachung des Hinweises auf die Patenterteilung: **10.06.2015**
(21) Anmeldenummer: 09751816.1
(22) Anmeldetag: 06.11.2009
(51) Int. Cl.: B63C 9/105

(54) **THERMISCHE ISOLIERTE, BEHEIZBARE UND FLEXIBLE FLUIDLEITUNG**
THERMALLY INSULATED, HEATABLE AND FLEXIBLE FLUID LINE
CONDUITE DE FLUIDES FLEXIBLE, THERMIQUEMENT ISOLÉE, POUVANT ÊTRE CHAUFFÉE

(30) Priorität: 10.11.2008 DE 202008014893 U
(43) Veröffentlichungstag der Anmeldung: 20.07.2011
(73) Patentinhaber: Rehau AG + Co, 95111 Rehau (DE)
(72) Erfinder: EBERT, Richard, 91052 Erlangen (DE); RIEDEL, Harald, 95194 Regnitzlosau (DE); SCHÖBEL, Michael, 95100 Selb (DE)
(86) Internationale Anmeldenummer: PCT/EP2009/007956
(87) Internationale Veröffentlichungsnummer: WO 2010/052008

(56) Entgegenhaltungen:
- DE-U1-202005 004 602
- DE-U1-202008 004 679
- GB-A- 1 578 125
- US-A- 3 519 518
- US-A- 4 399 319

## Beschreibung

Die Erfindung betrifft eine thermisch isolierte, beheizbare und flexible Fluidleitung, umfassend: eine Tragschicht, eine Heizeinrichtung und eine Isolationsschicht.

Derartige oder ähnliche Fluidleitungen sind aus den Druckschriften DE 103 44 137 A1, DE 102 01 920 A1, DE 10 2006 006 211 B3 und DE 20 2004 018 697 U1 bekannt.

Die herkömmlichen Fluidleitungen sind bei kleinen Fließquerschnitten zwischen 2 und 8 mm und Wandstärken von 0,5 bis 4 mm relativ klein dimensioniert und werden mit typischen Längen zwischen 1 und 5 m in einem Außenanbaubereich an einem Fahrzeugboden montiert. Ohne Isolierung würde ein erheblicher Anteil der Heizleistung an die Umgebung abgegeben werden. Durch die Konvektion des kalten Fahrtwindes, aber auch der heißen Umgebungsluft am Abgasstrang sind aufgrund der Länge der Leitung, die oft quer über den gesamten Unterboden führt, stark unterschiedlich Temperaturzonen möglich, durch welche die Leitung geführt werden muss. An die Fluidleitungen werden die Anforderungen gestellt, ein durch die Fluidleitung geführtes Fluid sowohl vor dem Einfrieren, als auch vor Überhitzung zu schützen. Bei den herkömmlichen Fluidleitungen handelt es sich allerdings um komplexe und verhältnismäßig unflexible Leitungen, die nicht hinreichend isolierend wirken und nur mit großem Aufwand zu verlegen sind.

Die US 4 399 319 A zeigt einen doppelläufigen Schlauch für den Baubereich mit anextrudierten Leitungen für den begleitenden Transport eines Heizmediums. Zur Isolierung ist eine geschäumte Außenschicht vorgesehen.

Die US 3 519 518 A sowie die GB 1 578 125 A offenbaren isolierte Transportleitungen für die petrochemische Industrie, welche ebenfalls über eine Begleitheizung verfügen.

Die DE 20 2008 004 679 U1 beschreibt eine Fluidleitung für medizinische Zwecke, welche in eine isolierende Ummantelung mit darin eingebetteten Heizelementen eingebracht wird. Der Erfindung liegt die Aufgabe zugrunde, eine thermisch isolierte, beheizbare und flexible Fluidleitung der oben genannten Bauart bereitzustellen, die wirtschaftlich und kostengünstig herstellbar und bei verbesserter Isolationswirkung leichter verlegbar ist als die herkömmlichen Fluidleitungen.

Die Aufgabe wird durch die Merkmale des Anspruchs 1 gelöst. Die in der Isolationsschicht eingeschlossenen Hohlräume haben eine sehr niedrige Wärmeleitfähigkeit und verringern den Wärme übertragenden Materialquerschnitt in der Isolationsschicht, so dass weniger Wärme von innen nach außen transportiert werden kann als über Vollmaterial.
Aufgrund der eingeschlossenen Hohlräume ist die Isolationsschicht zudem auch außerordentlich flexibel. Das poröse Material der Schaumstruktur kann wesentlich leichter gestaucht (z.B. in der Biegekehle) oder gestreckt werden (z.B. im Biegerücken) als massives Vollmaterial. Mit dem erfindungsgemäßen Koextrusionsverfahren können erhebliche Längen von Fluidleitungen besonders kostengünstig bereitgestellt werden. Das Koextrusionsverfahren ist weiterhin besonders gut geeignet, um die geschäumte Polymerschicht auf die fluidführende Tragschicht aufzubringen, ohne dass die Isolationsschicht eine Verbindung mit der Tragschicht eingeht. Dadurch lässt sich die Isolationsschicht bei der Montage leicht abisolieren.

Bevorzugte Weiterbildungen der Erfindung sind Gegenstände der Unteransprüche. Es kann sich als vorteilhaft erweisen, wenn die Isolationsschicht eine geschlossenzellige Schaumstruktur aufweist. Die Schaumzellen sind in der Regel mit Gas, beispielsweise Luft, gefüllt. Über die geschlossenen Zellwände findet nur ein unwesentlicher oder kein Gasaustausch statt, so dass die isolierende Wirkung noch weiter verbessert werden kann. Darüber hinaus wirkt das eingeschlossene Gas bei einer Biegebeanspruchung der Fluidleitung federnd. Dadurch verfügt die Fluidleitung über eine starke inhärente Rückstellkraft, welche die Fluidleitung stets in die ursprüngliche, gestreckte Form zurückdrängt.

Es kann sich als nützlich erweisen, wenn die Isolationsschicht die Außenschicht der Fluidleitung bildet. Die Isolationsschicht kann die Fluidleitung dadurch gegenüber mechanischen Einwirkungen schützen. Es kann sich als praktisch erweisen, wenn die Isolationsschicht aus einem thermoplastischen Elastomer, vorzugsweise einem Elastomer-modifizierten Polypropylen (EMPP) oder Santoprene, gefertigt ist. Ein Elastomer-modifiziertes Polypropylen (EMPP) ist ein modifiziertes Polypropylen (PP) mit vernetzten Ethylen-Propylen-Dien-Kautschuk (EPDM)-Anteilen. EMPP gehört zur Gruppe thermoplastischer Elastomere, die die Eigenschaften von vulkanisierbarem Kautschuk, wie Wärmebeständigkeit, günstiger Druckverformungsrest, gute elektrische Eigenschaften und niedrige Dichte erreichen. Die Verarbeitung ist ähnlich wie bei den herkömmlichen Thermoplasten. EMPP zeigt eine hervorragende Witterungs- und Alterungsbeständigkeit und ist verschweißbar mit sich selbst und mit Polypropylen (PP). Zudem weist EMPP günstige elektrische Isolierungseigenschaften auf. Diese ändern sich auch nach einer Wasserlagerung nur unwesentlich. Aus diesem Grund eignet sich EMPP besonders für die Isolierung von elektrischen Leitern. Santoprene bezeichnet ein vernetztes thermoplastisches Elastomer auf Olefinbasis, vorwiegend PP/EPDM.

Es kann sich als vorteilhaft erweisen, wenn die Isolationsschicht gegenüber der Tragschicht bewegbar ist, vorzugsweise entlang einer Leitungsachse (L) verschieblich und/oder um die Leitungsachse (L) verdrehbar ist. Vorzugsweise ist die Heizeinrichtung auch gegenüber der Isolationsschicht bewegbar, zumindest entlang einer Leitungsachse (L) verschieblich. Dadurch können die Tragschicht, die Heizeinrichtung und die Isolationsschicht auch bei starker Biegebeanspruchung der Fluidleitung möglichst wenig belastet werden, um nicht zu knicken. Beispielsweise kann bei einer Verlegung der Fluidleitung über eine oder mehrere starke Biegungen die Isolationsschicht derart gegenüber der Tragschicht positioniert werden, dass der oder die eingebetteten Leiter auf möglichst neutralen Biegelinien liegen und demnach möglichst wenig beansprucht sind. Dazu kann es sich weiterhin als vorteilhaft erweisen, wenn sich der Verlauf des Heizleiters in der Isolationsschicht an einem Außenumfang der Fluidleitung abzeichnet oder eine Markierung am Außenumfang der Fluidleitung angebracht ist, die den Verlauf des Heizleiters in der Isolationsschicht anzeigt.

Es kann sich als hilfreich erweisen, wenn die Isolationsschicht vollumfänglich geschlossen ist. Dadurch verfügt die Isolationsschicht über keinerlei potentielle Schwachstellen oder Wärmebrücken, welche die Funktionen der Isolationsschicht beeinträchtigen könnten.

Es kann vorteilhaft sein, wenn die Isolationsschicht eine Dichte von 0,1 bis 0,8 g/cm³, vorzugsweise von 0,2 bis 0,5 g/cm³, bevorzugt 0,4 g/cm³ aufweist. Bei derartigen Dichteverhältnissen liegt ein idealer Kompromiss zwischen Isolationswirkung und Materialfestigkeit vor.

Es kann hilfreich sein, wenn der Innendurchmesser (D_{I}) der Fluidleitung zwischen 1,5 und 8 mm, vorzugsweise zwischen 3 und 6 mm beträgt. Vorzugsweise beträgt der Außendurchmesser (D_{A}) der Fluidleitung zwischen 9 und 56 mm, vorzugsweise zwischen 12 und 42 mm, bevorzugt 15 mm. Eine Wandstärke der Tragschicht beträgt vorzugsweise zwischen 0,5 und 8 mm, vorzugsw. zwischen 1 und 2,5 mm, bevorzugt 1 mm. Bei derartigen Werten weist die Fluidleitung hervorragende Isolations- und Flexibilitätseigenschaften auf.

Es kann nützlich sein, wenn die Heizeinrichtung wenigstens einen Heizleiter aufweist, der in die Isolationsschicht eingebettet ist. Dadurch kann die Heizeinrichtung dauerhaft in der Nähe der Tragschicht gehalten werden. Die Heizeinrichtung verläuft beispielsweise axial gerade oder wendel- bzw. schraubenförmig oder in Schleifen um die Tragschicht und befindet sich vorzugsweise unmittelbar in Anlage an der Tragschicht, oder so, dass die einzelnen Heizleiter vollumfänglich vom Material der Isolationsschicht umgeben sind.
Dabei ist das Material der Isolationsschicht zwischen der Heizeinrichtung und der Tragschicht vorzugsweise gegenüber dem übrigen Material der Isolationsschicht verdichtet, so dass ein spezifischer Wärmeübergang radial nach innen besser ist als ein spezifischer Wärmeübergang radial nach außen, ausgehend von der radialen Position der Heizeinrichtung. Die Verdichtung des Materials der Isolationsschicht zwischen der Heizeinrichtung und der Tragschicht kann bewerkstelligt werden, indem die Heizeinrichtung beim Aufschäumen des Materials der Isolationsschicht eng an der Tragschicht gehalten wird. Dadurch wird das Aufschäumen des Materials der Isolationsschicht zwischen der Heizeinrichtung und der Tragschicht gehemmt.

Zur möglichst gleichmäßigen Beheizung des in der Fluidleitung geführten Fluides kann es praktisch sein, wenn die Heizeinrichtung mehrere Heizleiter aufweist, die in Winkelabständen regelmäßig und/oder unregelmäßig um eine Leitungsachse der Fluidleitung angeordnet sind.

Es kann von Vorteil sein, wenn ein oder auch mehrere elektrischer Leiter zur Leistungs- und/oder Signalübertragung in die Isolationsschicht eingebettet ist. Dadurch kann neben dem Fluid auch eine Leistungs- und/oder Signalübertragung über die erfindungsgemäße Fluidleitung bewerkstelligt werden.

Es kann sich als nützlich erweisen, wenn die Fluidleitung als Hockdruckleitung ausgebildet ist, wobei eine Wandstärke der Tragschicht derart bemessen ist, um eine gesonderte Druckarmierung zu ersetzen. Eine gesonderte Druckarmierung würde die Herstellung der Fluidleitung deutlich komplexer gestalten, als dies ohne gesonderte Druckarmierung der Fall ist. Die erforderlichen Festigkeitswerte der Fluidleitung werden vorzugsweise auch ohne die gesonderte Druckarmierung erfüllt.

Die Schaumstruktur der Isolationsschicht setzt der radialen Aufweitung der Tragschicht im Falle eines Anstiegs des Innendrucks eine erheblich Rückstellkraft entgegen, da das in den Zellen der Schaumstruktur komprimierte Gas einen Gegendruck erzeugt.

Es kann praktisch sein, wenn die Fluidleitung derart flexibel ausgelegt ist, dass ein minimaler Biegeradius kleiner als der dreifache Außendurchmesser der Fluidleitung ist. Dadurch kann die erfindungsgemäße Fluidleitung bei voller Funktionsfähigkeit auch in extrem beengten Bauräumen, insbesondere bei automobilen Anwendungen, verlegt werden, ohne Schaden zu erleiden. Ermöglich wird diese Flexibilität durch die Schaumstruktur der Isolationsschicht, da das poröse Material der Schaumstruktur wesentlich leichter gestaucht (z.B. in der Biegekehle) oder gestreckt werden kann (z.B. im Biegerücken) als massives Vollmaterial.

Die bevorzugte Ausführung der Erfindung wird nachstehend mit Bezug auf die beigefügten Zeichnungen beschrieben.

### Kurze Beschreibung der Zeichnungen

Es zeigen:
- Figur 1: eine Querschnittsansicht der erfindungsgemäßen Fluidleitung
- Figur 2: eine schematische Darstellung der erfindungsgemäßen Fluidleitung in einer Biegesituation, wobei ein Abschnitt der Fluidleitung eine Biegung um 90 ° beschreibt

### Detaillierte Beschreibung des bevorzugten Ausführungsbeispiels

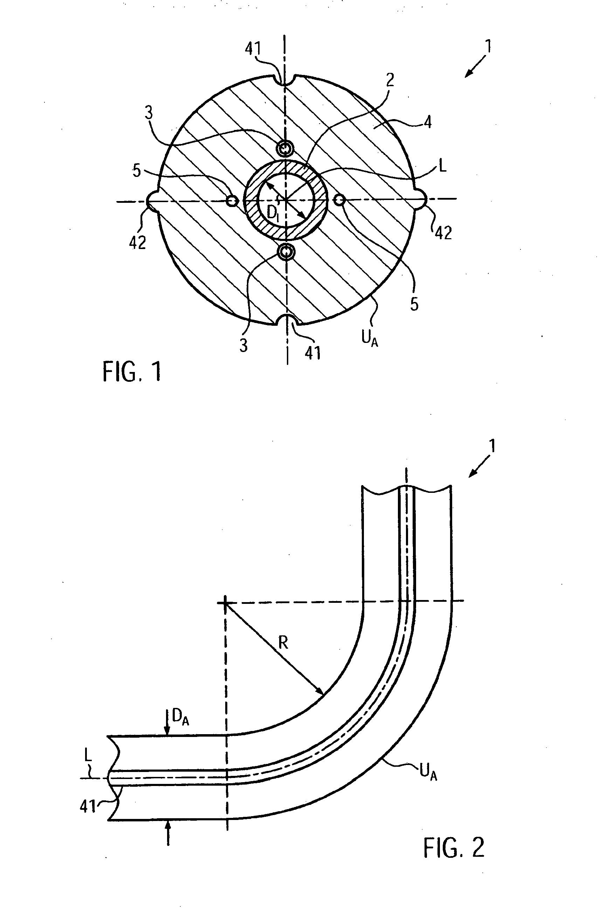

Figur 1 zeigt eine Querschnittsansicht der erfindungsgemäßen thermisch isolierten, beheizbaren und flexiblen Fluidleitung 1. Die erfindungsgemäße Fluidleitung 1 umfasst eine Tragschicht 2, eine Heizeinrichtung 3 und eine vollumfänglich geschlossene Isolationsschicht 4 mit geschlossenzelliger Schaumstruktur, welche die Außenschicht der Fluidleitung 1 bildet. Die Isolationsschicht 4 ist nicht fest mit der Tragschicht 1 verbunden, sondern ist gegenüber der Tragschicht 1 bewegbar, insbesondere entlang einer Leitungsachse L verschieblich und um die Leitungsachse L verdrehbar.

## Patentansprüche

1. Verwendung einer thermisch isolierten, beheizbaren und flexiblen Fluidleitung (1), umfassend:
- eine Tragschicht (2),
- eine Heizeinrichtung (3) und
- eine eine Schaumstruktur aufweisende Isolationsschicht (4),
- wobei die Fluidleitung (1) im Koextrusionsverfahren gefertigt und dadurch die Isolationsschicht (4) im Wege der Koextrusion auf die Tragschicht (2) aufgebracht ist, und
- wobei die Isolationsschicht (4) gegenüber der Tragschicht (2) entlang einer Leitungsachse (L) verschieblich und um die Leitungsachse (L) verdrehbar ist
als in einem Außenanbaubereich an einem Fahrzeugboden montierte Transportleitung für eine Harnstofflösung zur Abgasreinigung in automobilen Anwendungen.

2. Verwendung nach Anspruch 1, **dadurch gekennzeichnet, dass** die Isolationsschicht (4) eine geschlossenzellige Schaumstruktur aufweist.

3. Verwendung nach einem der vorangegangenen Ansprüche, **dadurch gekennzeichnet, dass** die Isolationsschicht (4) die Außenschicht der Fluidleitung (1) bildet.

4. Verwendung nach einem der vorangegangenen Ansprüche, **dadurch gekennzeichnet, dass** die Isolationsschicht (4) aus einem thermoplastischen Elastomer, vorzugsweise einem Elastomer-modifiziertem Polypropylen (EMPP) oder Santoprene, gefertigt ist.

5. Verwendung nach einem der vorangegangenen Ansprüche, **dadurch gekennzeichnet, dass** die Isolationsschicht (4) vollumfänglich geschlossen ist.

6. Verwendung nach einem der vorangegangenen Ansprüche, **dadurch gekennzeichnet, dass** die Isolationsschicht (4) eine Dichte von 0,1 bis 0,8 g/cm³, vorzugsweise von 0,2 bis 0,5 g/cm³, bevorzugt 0,4 g/cm³ aufweist.

7. Verwendung nach einem der vorangegangenen Ansprüche, **dadurch gekennzeichnet, dass** der Innendurchmesser (D_{I}) der Fluidleitung (1) zwischen 1,5 und 8 mm, vorzugsweise zwischen 3 und 6 mm beträgt.

8. Verwendung nach einem der vorangegangenen Ansprüche, **dadurch gekennzeichnet, dass** die Heizeinrichtung (3) einen Heizleiter aufweist, der in die Isolationsschicht (4) eingebettet ist.)

9. Verwendung nach einem der vorangegangenen Ansprüche, **dadurch gekennzeichnet, dass** die Heizeinrichtung (3) mehrere Heizleiter (3) aufweist, die in Winkelabständen um eine Leitungsachse (L) angeordnet sind.

10. Verwendung nach einem der vorangegangenen Ansprüche, **dadurch gekennzeichnet, dass** ein elektrischer Leiter (5) zur Leistungs- und/oder Signalübertragung in die Isolationsschicht (4) eingebettet ist.

11. Verwendung nach einem der vorangegangenen Ansprüche, **dadurch gekennzeichnet, dass** die Fluidleitung als Hockdruckleitung ausgebildet ist, wobei eine Wandstärke der Tragschicht (2) derart bemessen ist, um eine gesonderte Druckarmierung zu ersetzen.

12. Verwendung nach einem der vorangegangenen Ansprüche, **dadurch gekennzeichnet, dass** die Fluidleitung (1) derart flexibel ausgelegt ist, dass ein minimaler Biegeradius (R) kleiner als der dreifache Außendurchmesser (D_{A}) der Fluidleitung (1) ist.

## Claims

1. Use of a thermally insulated, heatable and flexible fluid line (1), comprising:
- a carrier layer (2),
- a heating device (3) and
- an insulating layer (4) having a foam structure,
- the fluid line (1) being produced by the coextrusion process and, as a result, the insulating layer (4) being applied to the carrier layer (2) by way of the coextrusion, and
- the insulating layer (4) being displaceable with respect to the carrier layer (2) along a line axis (L) and rotatable about the line axis (L),
as a transporting line, mounted on the floor of a vehicle in an exterior attachment area, for a urea solution for purifying the exhaust gas in automotive applications.

2. Use according to Claim 1, **characterized in that** the insulating layer (4) has a closed-cell foam structure.

3. Use according to one of the preceding claims, **characterized in that** the insulating layer (4) forms the outer layer of the fluid line (1).

4. Use according to one of the preceding claims, **characterized in that** the insulating layer (4) is produced from a thermoplastic elastomer, preferably an elastomer-modified polypropylene (EMPP) or Santoprene.

5. Use according to one of the preceding claims, **characterized in that** the insulating layer (4) is fully circumferentially closed.

6. Use according to one of the preceding claims, **characterized in that** the insulating layer (4) has a density of 0.1 0.8 g/cm3, preferably of 0.2 to 0.5 g/cm3, with preference 0.4 g/cm3.

7. Use according to one of the preceding claims, **characterized in that** the inside diameter (DI) of the fluid line (1) is between 1.5 and 8 mm, preferably between 3 and 6 mm.

8. Use according to one of the preceding claims, **characterized in that** the heating device (3) has a heating conductor, which is embedded in the insulating layer (4).

9. Use according to one of the preceding claims, **characterized in that** the heating device (3) has a number of heating conductors (3), which are arranged at angular intervals about a line axis (L).

10. Use according to one of the preceding claims, **characterized in that** an electrical conductor (5) for power and/or signal transmission is embedded in the insulating layer (4).

11. Use according to one of the preceding claims, **characterized in that** the fluid line is formed as a high-pressure line, a wall thickness of the carrier layer (2) being dimensioned in such a way as to be a substitute for separate compressive reinforcement.

12. Use according to one of the preceding claims, **characterized in that** the fluid line (1) is flexibly designed in such a way that a minimum bending radius (R) is less than three times the outside diameter (DA) of the fluid line (1).

## Revendications

1. Utilisation d'une conduite de fluides flexible, thermiquement isolée et pouvant être chauffée (1), comprenant
- une couche de support (2),
- un dispositif de chauffage (3) et
- une couche isolante (4) présentant une structure de mousse,
- dans laquelle la conduite de fluides (1) est fabriquée par un procédé de co-extrusion et la couche isolante (4) est de ce fait appliquée sur la couche de support (2) au cours de la co-extrusion, et
- dans laquelle la couche isolante (4) peut, par rapport à la couche de support (2) coulisser le long d'un axe de la conduite (L) et tourner autour de l'axe de la conduite (L),
comme conduite de transport montée à un plancher de véhicule dans une région portée extérieure pour une solution d'urée destinée au refroidissement des gaz d'échappement dans des applications automobiles.

2. Utilisation selon la revendication 1, **caractérisée en ce que** la couche isolante (4) présente une structure de mousse à cellules fermées.

3. Utilisation selon l'une quelconque des revendications précédentes, **caractérisée en ce que** la couche isolante (4) forme la couche extérieure de la conduite de fluides (1).

4. Utilisation selon l'une quelconque des revendications précédentes, **caractérisée en ce que** la couche isolante (4) est fabriquée en un élastomère thermoplastique, de préférence un polypropylène modifié par élastomère (EMPP) ou du Santoprène.

5. Utilisation selon l'une quelconque des revendications précédentes, **caractérisée en ce que** la couche isolante (4) est entièrement fermée.

6. Utilisation selon l'une quelconque des revendications précédentes, **caractérisée en ce que** la couche isolante (4) présente une densité de 0,1 à 0,8 g/cm3, de préférence de 0,2 à 0,5 g/cm3, et de préférence encore de 0,4 g/cm3.

7. Utilisation selon l'une quelconque des revendications précédentes, **caractérisée en ce que** le diamètre intérieur (DI) de la conduite de fluides (1) est compris entre 1,5 et 8 mm, de préférence entre 3 et 6 mm.

8. Utilisation selon l'une quelconque des revendications précédentes, **caractérisée en ce que** le dispositif de chauffage (3) présente un conducteur chauffant, qui est noyé dans la couche isolante (4).

9. Utilisation selon l'une quelconque des revendications précédentes, **caractérisée en ce que** le dispositif de chauffage (3) présente plusieurs conducteurs chauffants (3), qui sont disposés à des distances angulaires autour d'un axe de la conduite (L).

10. Utilisation selon l'une quelconque des revendications précédentes, **caractérisée en ce qu'**un conducteur électrique (5) destiné à la transmission de puissance et/ou de signaux est noyé dans la couche isolante (4).

11. Utilisation selon l'une quelconque des revendications précédentes, **caractérisée en ce que** la conduite de fluides est une conduite haute pression, dans laquelle une épaisseur de paroi de la couche de support (2) est dimensionnée de façon à remplacer une armature de pression séparée.

12. Utilisation selon l'une quelconque des revendications précédentes, **caractérisée en ce que** la conduite de fluides (1) est de conception flexible, de telle manière qu'un rayon de courbure minimal (R) soit plus petit que le triple du diamètre extérieur (DA) de la conduite de fluides (1).
